# EUROPÄISCHE PATENTSCHRIFT

(11) **EP 0 764 818 B1**
(45) Veröffentlichungstag und Bekanntmachung des Hinweises auf die Patenterteilung: **23.05.2001**
(21) Anmeldenummer: 96114392.2
(22) Anmeldetag: 09.09.1996
(51) Int. Cl.: F24D 3/16

(54) **Kontaktelement und Deckenelement für eine Heiz- und Kühldecke**
Contact element and ceiling element for a heated- and cooled ceiling
Elément de contact pour plafond et élément de plafond pour chauffage et refroidissement

(30) Priorität: 23.09.1995 CH 268495
(43) Veröffentlichungstag der Anmeldung: 26.03.1997
(73) Patentinhaber: BARCOL-AIR AG, 8712 Stäfa (CH)
(72) Erfinder: Sokolean, Helmuth, 8713 Uerikon (CH)
(74) Vertreter: Wagner, Wolfgang, Dr. Phil., Dipl.-Phys.

(56) Entgegenhaltungen:
- CH-A- 241 602
- CH-A- 298 442
- CH-A- 305 373
- FR-A- 1 046 905
- FR-A- 1 107 119

## Beschreibung

Die Erfindung betrifft ein Kontaktelement für eine Heizund Kühldecke gemäss dem Oberbegriff des Anspruchs 1 sowie ein Deckenelement für eine derartige Decke, welche ein solches Kontaktelement enthält.

Es sind verschiedene Ausführungen von Deckenelementen bekannt, die für Heizdecken und Kühldecken sowie Decken, die sowohl zum Heizen als auch zum Kühlen bestimmt sind, verwendet werden können. Einige solcher Ausführungen sind beschrieben in H. Sokolean: "Kühldeckentechnologie zur Erreichung des bestmöglichen Raumkomforts", Architektur und Technik 8/92, S. 49 - 53, B+L Verlags AG, Schlieren (Schweiz).

Eines der Grundprobleme von Deckenelementen der hier angesprochenen Art ist stets die Sicherstellung guten Wärmeübergangs zwischen einem Wärmeträgermedium, gewöhnlich einer Flüssigkeit, welche das Element durchströmt und der Deckenplatte, die das Deckenelement nach unten, also gegen den zu klimatisierenden Raum hin, abschliesst. Dabei bietet vor allem der Wärmeübergang zur Deckenplatte Schwierigkeiten. Die Deckenplatte hängt ja schon unter dem Einfluss ihres Eigengewichtes zwangsläufig mehr oder weniger stark durch, so dass der Abstand zur gewöhnlich als starres Rohr ausgebildeten Leitung, durch welche das Wärmeträgermedium strömt, auch wenn man von anderen möglichen Unebenheiten absieht, nicht konstant ist. Für dieses Problem existieren technisch befriedigende Lösungen, wie sie aus dem obengenannten Artikel hervorgehen. So kann z. B. ein Deckenelement einstückig mit der Deckenplatte und einer an der Oberseite desselben angeordneten Führung, in welche als Korrosionsschutz gegenüber der Flüssigkeit ein Kupfer- oder Stahlrohr eingezogen ist, aus Aluminium extrudiert sein. Diese Ausführung ist jedoch aufwendig und entsprechend teuer.

Weniger teuer sind Lösungen, bei denen die Führung Teil eines getrennt von der Deckenplatte hergestellten, z. B. aus Aluminium oder einem anderen korrosionsfesten Material extrudierten Kontaktelements ist, das unmittelbar mit der Deckenplatte verklebt ist. Auch in diesem Fall ist jedoch der Herstellungsaufwand nicht unbeträchtlich, zumal wegen der auftretenden thermischen Spannungen die Klebeverbindung hohe Anforderungen erfüllen muss. Oder es können unter Verzicht auf ein Kontaktelement vom Wärmeträgermedium durchflossene dünne Kunststoffschläuche unmittelbar auf die Deckenplatte aufgelegt sein. Hier ist jedoch der Wärmeübergang ohne die Herstellung verteuernde zusätzliche Massnahmen unbefriedigend.

Aus der CH-A-241 602 ist ein gattungsgemässes Kontaktelement bekannt, welches ein von Wärmeträgermedium durchflossenes Rohr ähnlich wie eine Rohrschelle umgibt und von einem Bolzen zusammen- und am Rohr festgehalten wird. Es läuft in zwei schräg nach unten aussen abstehende Kontaktfortsätze aus, welche sich unter elastischer Deformation an eine Deckenplatte anlegen. Falls das Kontaktelement dem Rohr über eine längere Strecke folgt, wie das zur Erzielung hoher Wärmeübertragung erforderlich ist, ist das Anschmiegen der in Längsrichtung offenbar durchgehenden Kontaktfortsätze an allfällige Unebenheiten der Deckenplatte jedoch höchstens sehr eingeschränkt möglich, was den Wärmeübergang stark beeinträchtigen kann.

Ein Kontaktelement aus elastischem Blech, welches eine nach oben offene Rinne, in welche ein Rohr eingeschnappt werden kann, bildet und in zwei Kontaktfortsätze ausläuft, die an einer Deckenplatte anliegen, ist aus der FR-A-1 107 119 bekannt. Die Möglichkeit einer Anpassung der Kontaktfortsätze an allfällige Unebeneinheiten der Deckenplatte ist kaum gegeben, so dass auch hier, wenn das Kontaktelement dem Rohr über eine grössere Strecke folgt, guter Wärmeübergang nicht in jedem Fall gewährleistet ist.

Aus der FR-A-1 046 905 ist ein auf ein Rohr aufschnappbares Halteorgan für eine Deckenplatte bekannt mit beidseits zwei abstehenden Fingern, die mit der Deckenplatte verbunden sind. Die auf der gleichen Seite angeordneten Finger sind voneinander beabstandet und weisen nur eine kleine Kontaktfläche mit der Deckenplatte auf. Sie sind daher nicht geeignet, wirksam Wärme zwischen dem Rohr und der Deckenplatte zu übertragen.

Aufgabe der Erfindung ist es, ein Kontaktelement anzugeben, das sehr guten Wärmeübergang zwischen der von einem Wärmeträgermedium durchflossenen Leitung einerseits und der Deckenplatte andererseits herstellt - auch wenn die letztere Unebenheiten aufweist - und zugleich zu günstigen Preisen herstellbar ist, sowie ein entsprechendes Deckenelement. Diese Aufgabe wird durch das Kontaktelement, wie es in den Ansprüchen gekennzeichnet ist und das darauf beruhende Deckenelement gelöst. Es werden Lösungen vorgeschlagen, bei denen das Kontaktelement weitgehend von der Deckenplatte unabhängig ist, jedoch auf einfache Weise gut wärmeleitender Kontakt zwischen ihnen hergestellt ist.

Die durch die Erfindung erzielten Vorteile bestehen in erster Linie darin, dass das erfindungsgemässe Kontaktelement selbst bei ungünstiger Geometrie der Deckenplatte, insbesondere auch bei kleinräumigen Unebenheiten, ausgezeichneten thermischen Kontakt sicherstellt. Dazu ist es verhältnismässig preisgünstig herstellbar. Darüberhinaus ist es im Einbau besonders einfach zu handhaben und flexibel einsetzbar, da die Verbindung zwischen der Flüssigkeit führenden Leitung und dem Kontaktelement leicht herstellbar und lösbar gestaltet werden kann und zwischen dem Kontaktelement und der Deckenplatte gar keine feste Verbindung vorgesehen ist. Die Anordnung der Kontaktelemente kann daher sehr einfach eingestellt und bei Bedarf auch später mit geringem Aufwand an die erforderliche örtliche Heiz- oder Kühlleistung angepasst werden.

Im folgenden wird die Erfindung anhand von Figuren, welche lediglich Ausführungsbeispiele darstellen, näher erläutert. Es zeigen
- Fig. 1a: eine Draufsicht auf ein erfindungsgemässes Deckenelement gemäss einer ersten Ausführungsform,
- Fig. 1b: einen Querschnitt längs B-B durch das Deckenelement von Fig. 1a,
- Fig. 2: einen Querschnitt durch ein erfindungsgemässes Deckenelement gemäss einer zweiten Ausführungsform,
- Fig. 3a: einen Querschnitt längs A-A in Fig. 3b durch ein erfindungsgemässes Deckenelement gemäss einer dritten Ausführungsform und
- Fig. 3b: einen Längsschnitt längs B-B in Fig. 3a.

Alle Deckenelemente werden durch eine rechteckige - es kommen natürlich auch andere Formen in Frage - vorzugsweise, aber nicht notwendigerweise gelochte Deckenplatte 1, z. B. aus Aluminiumblech, Stahlblech, Kunststoff oder auch Holz gegen den zu klimatisierenden Raum hin abgeschlossen. Zur Befestigung weist die Deckenplatte 1 seitliche Flansche 2 auf. Das Wärmeträgermedium, gewöhnlich Wasser, Sole oder eine andere Flüssigkeit, wird durch ein Rohr 3, das z. B. aus Kupfer, Stahl oder auch aus Kunststoff bestehen kann, geleitet. Statt eines Rohres kann auch ein Schlauch verwendet werden. Bei hohen Anforderungen an die Wärmeübertragung kommen aber vor allem Metallrohre in Frage.

Damit Wärme mit hohem Wirkungsgrad zwischen dem Rohr 3 und der Deckenplatte 1 übertragen wird, ist ein Kontaktelement 4 vorgesehen, das einstückig aus Blech hergestellt ist. Das Material sollte gut wärmeleitend und plastisch oder elastisch deformierbar sein, vorzugsweise letzteres. In Frage kommen daher vor allem Kupferlegierungen, z. B. Messing oder eine Kupfer-Beryllium-Legierung. Das Rohr kann natürlich statt gerade, wie in den Figuren dargestellt, auch mäanderartig über die Deckenplatte 1 laufen und der wärmeleitende Kontakt durch mehrere Kontaktelemente hergestellt sein.

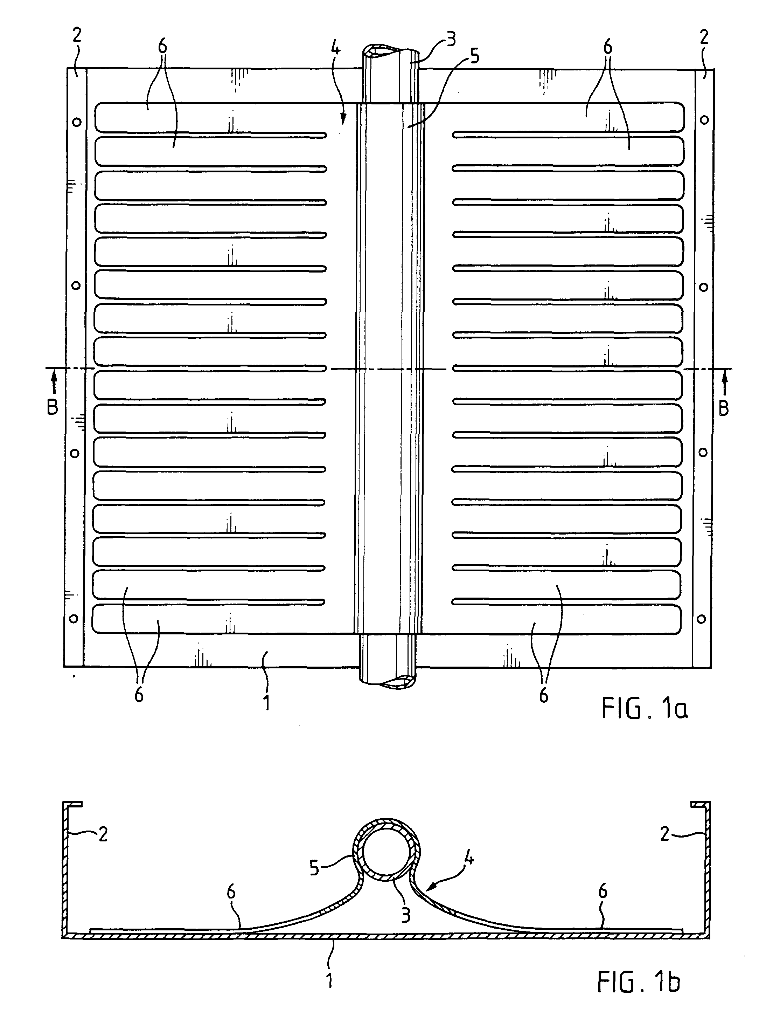

Gemäss der ersten Ausführungsform (Fig. 1a,b) ist im Kontaktelement 4 als Führung für das Rohr 3 durch Biegen eine nach unten offene Führungsrinne 5 hergestellt, mit welcher das Kontaktelement 4 von oben auf das Rohr 3 aufgeschnappt ist. Das Kontaktelement 4 drückt im Bereich der Führungsrinne 5 elastisch gegen das Rohr 3, so dass ein guter wärmeleitender Kontakt zwischen diesen Teilen herrscht.

Das Kontaktelement 4 weist gemäss der ersten Ausführungsform zwei symmetrisch an zur Führungsrinne 5 parallelen Rändern angeordnete Reihen nebeneinander liegender paralleler Kontaktfinger 6 auf, welche als dünne, ca. 1 cm breite Streifen ausgebildet sind und in unbelastetem Zustand schräg nach unten und aussen ragen, jedoch bei zusammengesetztem Deckenelement durch den Kontakt mit der Oberseite der Deckenplatte 1 wie dargestellt elastisch in die Horizontale abgebogen sind.

Die Unterteilung des gegen die Deckenplatte 1 gerichteten Teils des Kontaktelements 4 in eine Vielzahl von Kontaktfingern 6 - pro Reihe mindestens zwei, in der Regel mindestens acht bis zehn, die Zahl kann aber auch wie dargestellt sechzehn betragen oder noch wesentlich grösser sein - hat nicht nur eine wesentlich erhöhte elastische Nachgiebigkeit zur Folge, sondern vor allem, dass die Kontaktfläche zur Deckenplatte 1 in verhältnismässig kleine, voneinander weitgehend entkoppelte Einheiten aufgeteilt ist, welche sich unabhängig voneinander an die Oberseite der Deckenplatte 1 anschmiegen, so dass allfällige - auch kleinräumige - Unebenheiten derselben ohne weiteres kompensiert werden. Die Kontaktfinger 6 bilden so zusammen eine grosse, sehr eng an der Deckenplatte 1 anliegende Kontaktfläche, die einen ausgezeichneten Wärmeübergang gewährleistet. Der einzelne Kontaktfinger 6 wird dabei dank seiner Elastizität und seiner geringen Breite mit einem grossen Teil seiner Länge satt an die Oberseite der Deckenplatte 1 angedrückt. Da das Kontaktelement 4 weder mit dem Rohr 3 noch mit der Deckenplatte 1 unverschiebbar verbunden - z. B. verklebt - ist, beeinträchtigen unterschiedliche Wärmeausdehnungen der genannten Teile den thermischen Kontakt nicht und führen auch sonst nicht zu Schwierigkeiten.

Die Abmessungen und die elastischen Eigenschaften der Kontaktfinger können je nach den Einsatzbedingungen des Kontaktelements recht verschieden sein. Je ausgeprägter die zu erwartenden Unebenheiten der Deckenplatte 1 sind, desto kleiner wird man die Breite der Kontaktfinger wählen und ihren elastischen Widerstand einstellen. Im allgemeinen wird die Breite zwischen 2 mm und 20 mm liegen, doch sind auch andere Werte möglich. Im Extremfall können die Kontaktfinger auch drahtartig ausgebildet sein. Vorzugsweise sind sie stets fransenartig am Rand eines flächig ausgebildeten Kontaktelements angeordnet, doch können auch schlaufenartig ausgebildete Kontaktfinger ohne freie Enden vorgesehen werden. Es ist auch denkbar, die Kontaktfinger über eine Fläche verteilt anzuordnen, z. B. in mehreren parallelen Reihen, so dass sie eine bürstenartige Struktur bilden.

Die Herstellung der Kontaktfinger kann z. B. durch Stanzen oder Formätzen erfolgen. Die letztere Herstellungsart hat den Vorteil, dass die Ausbildung von Brauen, die den Wärmeübergang verschlechtern können, von vornherein vermieden wird.

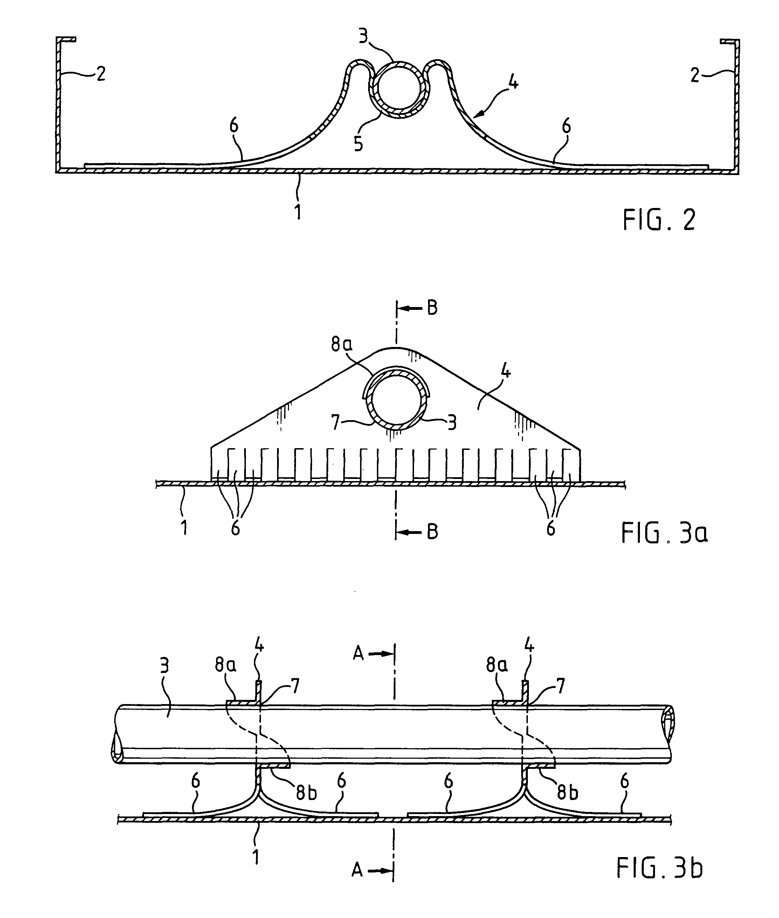

Gemäss der zweiten Ausführungsform (Fig. 2) ist das Kontaktelement 4 insofern geringfügig anders ausgebildet, als die Führungsrinne 5 nach oben offen ist. Das Rohr 3 kann also von oben in die Führungsrinne 5 eingeschnappt werden.

Gemäss der dritten Ausführungsform (Fig, 3a,b) ist das Kontaktelement 4 jeweils als quer zum Rohr 3 ausgerichtete, etwa dreieckige Platte ausgebildet, die an ihrem unteren Rand eine Reihe von nebeneinander angeordneten Kontaktfingern 6 trägt. Die Führung für das Rohr 3 wird von einer kreisrunden Oeffnung 7 in der Platte und zwei an dieselbe anschliessende Auskragungen 8a,b gebildet, mit denen es in engem, gut wärmeleitendem Kontakt steht. Die Kontaktelemente 4 können nacheinander auf das Rohr 3 aufgeschoben werden.

Die Kontaktfinger 6 ragen in entspanntem Zustand schräg nach unten, und zwar abwechselnd nach entgegengesetzten Seiten abgebogen, so dass sie sich beim Kontakt mit der Oberseite der Deckenplatte 1 selbsttätig wie dargestellt in abwechselnd entgegengesetzten Richtungen an dieselbe anschmiegen und eine verhältnismässig grosse Fläche teilweise bedecken. Werden die Kontaktelemente abwechselnd entgegengesetzt orientiert auf das Rohr aufgeschoben, so können die Kontaktfinger aufeinanderfolgender Kontaktelemente ineinandergreifen, so dass dieselben auch verhältnismässig eng zusammengeschoben werden können. Bei gleichsinniger Ausrichtung der Kontaktfinger sind diesbezüglich nur durch die Auskragungen 8a,b Grenzen gesetzt.

## Patentansprüche

1. Kontaktelement für eine Heiz- und Kühldecke mit einer Führung zur Aufnahme einer von einem Wärmeträgermedium durchflossenen Leitung und einer Kontaktfläche zur Kontaktierung einer Deckenplatte (1), **dadurch gekennzeichnet, dass** mindestens ein Teil der Kontaktfläche von Oberflächenteilen einer Mehrzahl in mindestens einer Reihe jeweils unmittelbar nebeneinander angeordneter, mit der Führung in wärmeleitender Verbindung stehender Kontaktfinger (6) aus deformierbarem Material gebildet wird.

2. Kontaktelement nach Anspruch 1, **dadurch gekennzeichnet, dass** die Kontaktfinger (6) aus elastisch deformierbarem Material bestehen.

3. Kontaktelement nach Anspruch 1 oder 2, **dadurch gekennzeichnet, dass** eine Reihe jeweils mindestens vier im wesentlichen parallel angeordnete Kontaktfinger (6) aufweist.

4. Kontaktelement nach einem der Ansprüche 1 bis 3, **dadurch gekennzeichnet, dass** die Kontaktfinger (6) streifenförmig ausgebildet sind.

5. Kontaktelement nach Anspruch 4, **dadurch gekennzeichnet, dass** die Breite der Kontaktfinger (6) zwischen 2 mm und 20 mm beträgt.

6. Kontaktelement nach einem der Ansprüche 1 bis 5, **dadurch gekennzeichnet, dass** die Kontaktfinger (6) Kupfer enthalten.

7. Kontaktelement nach Anspruch 6, **dadurch gekennzeichnet, dass** die Kontaktfinger (6) aus einer elastischen Kupferlegierung bestehen.

8. Kontaktelement nach einem der Ansprüche 1 bis 7, **dadurch gekennzeichnet, dass** es einstückig aus Blech hergestellt ist.

9. Kontaktelement nach Anspruch 8, **dadurch gekennzeichnet, dass** die Kontaktfinger (6) mindestens zum Teil am Rand angeordnet sind.

10. Kontaktelement nach Anspruch 9, **dadurch gekennzeichnet, dass** es als Führung eine eingebogene Führungsrinne (5) aufweist und die Kontaktfinger (6) an zu derselben etwa parallelen Rändern angeordnet sind.

11. Kontaktelement nach Anspruch 9, **dadurch gekennzeichnet, dass** es als Führung eine Oeffnung (7) aufweist und die Kontaktfinger (6) an einem quer zur Durchgangsrichtung derselben gerichteten Rand angeordnet sind.

12. Kontaktelement nach einem der Ansprüche 1 bis 11, **dadurch gekennzeichnet, dass** die Kontaktfinger (6) durch Stanzen oder Formätzen hergestellt sind.

13. Kontaktelement nach einem der Ansprüche 1 bis 12, **dadurch gekennzeichnet, dass** es auf die Leitung aufschnappbar ist.

14. Deckenelement für eine Heiz- und Kühldecke, mit einer Deckenplatte (1) und einem an der Oberseite derselben angeordneten Kontaktelement (4) nach einem der Ansprüche 1 bis 13, **dadurch gekennzeichnet, dass** die Kontaktfinger (6) an die Oberseite der Deckenplatte (1) angeschmiegt sind.

## Claims

1. Contact element for a heating and cooling ceiling, having a guide for receiving a conduit through which heat transfer medium flows, and having a contact surface for making contact with a ceiling panel (1), characterized in that at least part of the contact surface is formed by surface parts of a plurality of contact fingers (6) which are in heat-conducting connection with the guide, consist of a deformable material and are arranged, one beside the other in each case, in at least one row.

2. Contact element according to Claim 1, characterized in that the contact fingers (6) consist of an elastically deformable material.

3. Contact element according to Claim 1 or 2, characterized in that a row has in each case at least four essentially parallel contact fingers (6).

4. Contact element according to one of Claims 1 to 3, characterized in that the contact fingers (6) are designed in the form of strips.

5. Contact element according to Claim 4, characterized in that the width of the contact fingers (6) is between 2 mm and 20 mm.

6. Contact element according to one of Claims 1 to 5, characterized in that the contact fingers (6) contain copper.

7. Contact element according to Claim 6, characterized in that the contact fingers (6) consist of an elastic copper alloy.

8. Contact element according to one of Claims 1 to 7, characterized in that it is produced in one piece from sheet metal.

9. Contact element according to Claim 8, characterized in that the contact fingers (6) are arranged at least partly on the border.

10. Contact element according to Claim 9, characterized in that, as a guide, it has a guide channel (5) which is formed by bending, and the contact fingers (6) are arranged on borders which are approximately parallel to said guide channel.

11. Contact element according to Claim 9, characterized in that, as a guide, it has an opening (7), and the contact fingers (6) are arranged on a border which is directed transversely with respect to the through-passage direction of said opening.

12. Contact element according to one of Claims 1 to 11, characterized in that the contact fingers (6) are produced by punching or chemical milling.

13. Contact element according to one of Claims 1 to 12, characterized in that it can be snap-fitted onto the conduit.

14. Ceiling element for a heating and cooling ceiling, having a ceiling panel (1) and a contact element (4), arranged on the upper side of said ceiling panel, according to one of Claims 1 to 13, characterized in that the contact fingers (6) fit snugly against the upper side of the ceiling panel (1).

## Revendications

1. Élément de contact pour un plafond chauffant et refroidissant, muni d'un guidage pour recevoir une conduite, traversée par un écoulement de fluide caloporteur, et d'une surface de contact pour la mise en contact d'une plaque de plafond (1), caractérisé en ce qu'au moins une partie de la surface de contact est constituée par des parties de surface d'une pluralité de doigts de contact (6) en matériau déformable, mis en liaison conductrice de la chaleur avec le guidage, disposés en au moins une rangée, chaque fois directement les uns à côté des autres.

2. Élément de contact selon la revendication 1, caractérisé en ce que les doigts de contact (6) sont constitués d'un matériau déformable élastiquement.

3. Élément de contact selon la revendication 1 ou 2, caractérisé en ce qu'une rangée présente chaque fois au moins quatre doigts de contact (6) disposés pratiquement parallèlement.

4. Élément de contact selon l'une des revendications 1 à 3, caractérisé en ce que les doigts de contact (6) sont configurés en forme de bande.

5. Élément de contact selon la revendication 4, caractérisé en ce que la largeur des doigts de contact (6) est comprise entre 2 mm et 20 mm.

6. Élément de contact selon l'une des revendications 1 à 5, caractérisé en ce que les doigts de contact (6) contiennent du cuivre.

7. Élément de contact selon la revendication 6, caractérisé en ce que les doigts de contact (6) sont constitués d'un alliage de cuivre élastique.

8. Élément de contact selon l'une des revendications 1 à 7, caractérisé en ce qu'il est fabriqué d'une seule pièce, à partir de tôle.

9. Élément de contact selon la revendication 8, caractérisé en ce que les doigts de contact (6) sont disposés au moins en partie sur le bord.

10. Élément de contact selon la revendication 9, caractérisé en ce qu'il présente, à titre de guidage, une goulotte de guidage (5) repliée sur l'intérieur et les doigts de contact (6) sont disposés sur des bords à peu près parallèles à celle-ci.

11. Élément de contact selon la revendication 9, caractérisé en ce qu'il présente à titre de guidage une ouverture (7) et les doigts de contact (6) sont disposés sur un bord, orienté transversalement par rapport à la direction de passage de celle-ci.

12. Élément de contact selon l'une des revendications 1 à 11, caractérisé en ce que les doigts de contact (6) sont fabriqués par estampage ou morsure chimique à la forme.

13. Élément de contact selon l'une des revendications 1 à 12, caractérisé en ce qu'il est susceptible d'être enclipsé sur la conduite.

14. Élément de plafond pour un plafond chauffant et refroidissant, avec une plaque de plafond (1) et un élément de contact (4), disposé en face supérieure de celle-ci, selon l'une des revendications 1 à 13,
caractérisé en ce que les doigts de contact (6) sont configurés pour épouser la forme de la face supérieure de la plaque de plafond (1).
